# EUROPÄISCHE PATENTSCHRIFT

(11) **EP 1 191 701 B1**
(45) Veröffentlichungstag und Bekanntmachung des Hinweises auf die Patenterteilung: **20.09.2006**
(21) Anmeldenummer: 01117732.6
(22) Anmeldetag: 30.07.2001
(51) Int. Cl.: H04B 1/18, H01P 5/12

(54) **Elektrischer Baustein zur Weiterleitung von Signalen von mindestens einer Empfangsantenne an mindestens einen Empfänger**
Electrical component for the transmission of signals from at least one receiving antenna to at least one receiver
Module électrique pour la transmission de signaux d'au moins une antenne de réception vers au moins un récepteur

(30) Priorität: 14.09.2000 DE 10045872
(43) Veröffentlichungstag der Anmeldung: 27.03.2002
(73) Patentinhaber: Skytronic GmbH, 73614 Schorndorf (DE)
(72) Erfinder: Merz, Rainer, 73666 Baltmannsweiler (DE)
(74) Vertreter: Dreiss, Fuhlendorf, Steimle & Becker

(56) Entgegenhaltungen:
- EP-A- 0 980 199
- DE-A- 1 590 715
- DE-A- 19 821 471
- DE-C- 19 851 197

## Beschreibung

Die Erfindung betrifft einen elektrischen Baustein zur Weiterleitung von Signalen mindestens einer Empfangsantenne an mindestens einen Empfänger nach dem Oberbegriff des Anspruchs 1. Weiterhin betrifft die Erfindung eine Zusammenschaltung von elektrischen Bausteinen zur Weiterleitung von Signalen mindestens einer Empfangsantenne an mindestens einen Empfänger nach dem Anspruch 9.

Aus der deutschen Offenlegungsschrift DE 198 21 471 A1 ist eine elektrische Vorrichtung bekannt, mit deren Hilfe die vier Signale einer Empfangsantenne an einen oder mehrere Empfänger weitergeleitet werden können. Zu diesem Zweck ist ein Gehäuse vorhanden, in das einzelne Schaltmodule eingesteckt werden können. Über entsprechende Steckvorrichtungen werden die vier Signale der Empfangsantenne allen Schaltmodulen zur Verfügung gestellt. Mit Hilfe des jeweiligen Schaltmoduls kann der an das Schaltmodul angeschlossene Empfänger eines der vier Signale der Empfangsantenne auswählen, damit dann dieses ausgewählte Signal an ihn weitergeleitet wird.

Das Gehäuse ist mit einer vorgegebenen Anzahl von Steckplätzen für die Schaltmodule versehen. Sollen eine größere Anzahl der Empfänger mit den Signalen der Empfangsantenne versorgt werden, so ist es möglich, eine Kaskadierung der beschriebenen elektrischen Vorrichtung vorzunehmen.

Aus der DE 198 51 197 C1 ist ein Bausteinsystem zum Aufbau elektrischer Schaltungen bekannt. Dort ist ein aus einem Oberteil und einem Unterteil zusammengesetzter Einzelbastein vorgesehen, in dem ein einzelnes elektrisches Bauelement, beispielsweise ein Widerstand, aufgenommen ist. Durch ein Zusammenstecken mehrerer derartiger Einzelbausteine mit unterschiedlichen, darin enthaltenen elektrischen Bauelementen kann eine elektrische Schaltung aufgebaut werden.

Aufgabe der vorliegenden Erfindung ist es, die bekannte elektrische Vorrichtung der eingangs genannten Art zu verbessern, und zwar insbesondere im Hinblick auf die Möglichkeit einer Weiterleitung von mehr als vier Signalen einer oder mehrerer Empfangsantennen.

Diese Aufgabe wird bei einem elektrischen Baustein der eingangs genannten Art erfindungsgemäß durch die Merkmale des Anspruchs 1 gelöst. Bei einer Zusammenschaltung von elektrischen Bausteinen der eingangs genannten Art wird die Aufgabe erfindungsgemäß durch die Merkmale des Anspruchs 9 gelöst.

Durch die Erfindung wird ein elektrischer Baustein zur Verfügung gestellt, der als solcher zur Weiterleitung von Signalen der Empfangsantenne an einen Empfänger geeignet ist, und der erfindungsgemäß in beliebiger Weise kaskadierbar ist.

Dies bedeutet, dass mit Hilfe eines einzigen Bausteins beispielsweise vier Signale einer Empfangsantenne in beliebiger Weise an vier Empfänger weitergeleitet werden können. Für diese Grundform ist - wie gesagt - ein einziger Baustein ausreichend.

Sollen mehr als vier Empfänger mit den Signalen der Empfangsantenne versorgt werden, so ist es bei der Erfindung möglich, mehrere Bausteine "in Richtung" der Empfänger zu kaskadieren. Dies bedeutet, dass mehrere Bausteine
"in Richtung" der Empfänger zusammengesteckt werden können. Die erfindungsgemäß entstehende Zusammenschaltung mehrerer Bausteine ist dann dazu geeignet, beispielsweise vier Signale einer Empfangsantenne an ein Vielfaches von vier Empfängern, beispielsweise an zwölf Empfänger in beliebiger Weise weiterzuleiten.

Sollen mehr als vier Signale von Empfangsantennen an die angeschlossenen Empfänger verteilt werden, so ist es bei der Erfindung möglich, mehrere Bausteine "in Richtung" der Signale der Empfangsantennen zu kaskadieren. Dies bedeutet, dass mehrere Bausteine "in Richtung" der Signale der Empfangsantennen zusammengesteckt werden. Die erfindungsgemäß daraus entstehende Zusammenschaltung von Bausteinen ist dann dazu geeignet, beispielsweise ein Vielfaches von vier Signalen von Empfangsantennen, also beispielsweise zwölf Signale von Empfangsantennen, an beispielsweise vier angeschlossene Empfänger in beliebiger Weise weiterzuleiten.

Wesentlich ist dabei, dass der erfindungsgemäße Baustein derart mit elektrischen Schaltungen versehen ist, dass eine Kaskadierung "in Richtung" der Empfänger, wie auch eine Kaskadierung "in Richtung" der Signale der Empfangsantennen möglich ist, ohne dass hierzu irgendwelche Änderungen an dem Baustein erforderlich sind. Es kann also immer ein- und derselbe Baustein an jeder Stelle der Kaskadierungen verwendet werden.

Weiterhin ist es bei der Erfindung möglich, gleichzeitig in beide Richtungen zu kaskadieren. Dies bedeutet, dass mehrere Bausteine matrixförmig "in Richtung" der Signale der Empfangsantennen, wie auch "in Richtung" der Empfänger zusammengesteckt werden können. Damit ist es möglich eine beliebige Anzahl von Signalen von Empfangsantennen auf eine beliebige Anzahl von Empfängern in beliebier Weise weiterzuleiten.

Bei vorteilhaften Ausgestaltungen des erfindungsgemäßen Bausteins weist dieser Baustein ein vorzugsweise quadratisches Gehäuse auf, in dem die elektrischen Schaltungen untergebracht sind. An den Seiten des Gehäuses sind die eingangsseitigen und ausgangsseitigen Stecker für die Signale von den Empfangsantennen und für die Empfänger angeordnet. Dabei sind auf einander gegenüberliegenden Seiten immer diejenigen Stecker angeordnet, die zum Kaskadieren von Bausteinen ineinandergesteckt werden müssen. Auf diese Weise kann eine Kaskadierung "in Richtung" der Signale der Empfangsantennen, wie auch "in Richtung" der Empfänger einzig und allein dadurch erreicht werden, dass die einander zugeordeten Stecker der verschiedenen Bausteine zusammengesteckt werden. Dies erlaubt eine besonders einfache und übersichtliche Montage jeder beliebigen Zusammenschaltung von erfindungsgemäßen Bausteinen.
Bei besonders vorteilhaften Weiterbildungen der Erfindung ist ein Netzteil vorgesehen, das über einen Stecker mit dem Baustein zusammmensteckbar ist. Auf diese Weise ist es insbesondere möglich, die an dem Baustein eingangsseitig angeschlossen Empfangsantennen mit Spannung zu versorgen.

Bei weiteren vorteilhaften Weiterbildungen der Erfindung ist ein VHF/UHF-Bauteil vorgesehen, das über Stecker mit dem Baustein zusammensteckbar ist. Auf diese Weise ist es möglich, auch ein VHF/UHF-Signal einzuschleifen und an jeden der angeschlossenen Empfänger weiterzuleiten. Dabei ist es besonders zweckmäßig, wenn auch das VHF/UHF-Bauteil in gleicher Weise wie der erfindungsgemäße Baustein "in Richtung" der ausgangsseitigen Empfänger kaskadierbar ist.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in der Zeichnung.
Fig. 1 zeigt eine schematische Ansicht eines Ausführungsbeispiels eines erfindungsgemäßen elekrischen Bausteins zur Weiterleitung von Signalen mindestens einer Empfangsantenne an mindestens einen Empfänger,
Fig. 2 zeigt eine schematische Ansicht einer Zusammenschaltung der Bausteine der Figur 1, wobei durch die Zusammenschaltung eine Erhöhung der Anzahl der möglichen Empfänger erreicht wird,
Fig. 3 zeigt eine schematische Ansicht einer Zusammenschaltung der Bausteine der Figur 1, wobei durch die Zusammenschaltung eine Erhöhung der Anzahl der möglichen eingangsseitigen Signale erreicht wird,
Fig. 4 zeigt eine schematische Ansicht einer Zusammenschaltung der Bausteine der Figur 1, wobei durch die Zusammenschaltung eine Erhöhung der Anzahl der eingangsseitigen Signale, wie auch eine Erhöhung der Anzahl der ausgangsseitigen möglichen Empfänger erreicht wird,
Fig. 5a - 5c zeigen schematische Ansichten von beispielhaften Möglichkeiten der Zusammenschaltung der Bausteine der Figur 1, wobei durch die Zusammenschaltungen auf verschiedene Arten und Weisen eine Erhöhung der eingangsseitigen Signale, wie auch eine Erhöhung der ausgangsseitigen möglichen Empfänger erreicht wird,
Fig. 6 zeigt eine schematische Ansicht einer Zusammenschaltung der Bausteine der Figur 1, wobei durch die Zusammenschaltung eine weitere Erhöhung der eingangsseitigen Signale erreicht wird,
Fig. 7 zeigt eine schematische Ansicht einer Zusammenschaltung des Bausteins der Figur 1 mit einem Netzteil, und
Fig. 8 zeigt eine schematische Ansicht einer Zusammenschaltung des Bausteins der Figur 1 mit einem VHF/UHF-Bauteil.

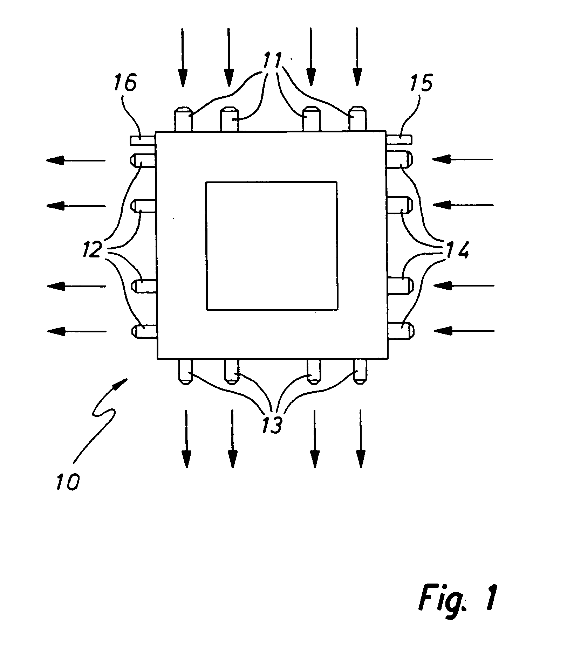

In der Figur 1 ist ein elektrischer Baustein 10 dargestellt, der zum Aufbau einer Satelliten-Empfangsanlage verwendet werden kann. Der Baustein 10 ist dazu geeignet, Signale mindestens einer Empfangsantenne an mindestens einen Empfänger weiterzuleiten.

Hierzu weist der Baustein 10 vier eingangsseitige Stecker 11 auf, an die die Signale einer Empfangsantenne angeschlossen werden können. So ist es möglich, an die Stecker 11 die Signale der vertikalen und horizontalen Polarisationsebene zweier Satelliten aufzuschalten, wobei diese Signale mit Hilfe der Empfangsantenne empfangen werden. Ebenfalls ist es möglich, beispielsweise bei dem Astra- oder Eutelsat-Satelliten, auf die vier Stecker 11 die Signale der vertikalen und horizontalen Polarisationsebene, und zwar jeweils für den analogen und digitalen Betrieb aufzuschalten.

Weiterhin weist der Baustein 10 vier Ausgangsstecker 12 auf. An die Ausgangsstecker 12 können Empfänger angeschlossen werden.

Der Baustein 10 ist dazu geeignet, die vier an den Steckern 11 anliegenden, eingangsseitigen Signale an die vier ausgangsseitigen, den Empfängern zugeordneten Stecker 12 weiterzuleiten. Die Auswahl, welches der eingangsseitigen Signale an welchen der Empfänger weitergeleitet wird, kann von dem jeweiligen Empfänger bestimmt werden. Zu diesem Zweck legt der Empfänger ein vorgegebenes Signal, beispielsweise eine bestimmte Spannung, an denjenigen Stecker 12 an, mit dem er verbunden ist. Diese Spannung wird von dem Baustein 10 empfangen und verarbeitet. In Abhängigkeit von dieser Spannung werden dann elektronische Schalter in dem Baustein 10 derart geschaltet, dass die erwünschte Verbindung von dem eingangsseitigen Signal zu dem zugehörigen Empfänger entsteht.
Weiterhin ist der Baustein 10 mit vier Steckern 13 versehen, von denen jeder mit einem der vier Stecker 11 verbunden ist. Die eingangsseitig an die Stecker 11 angelegten Signale mindestens einer Empfangsantenne stehen damit ausgangsseitig an den Steckern 13 zum Abgriff zur Verfügung.

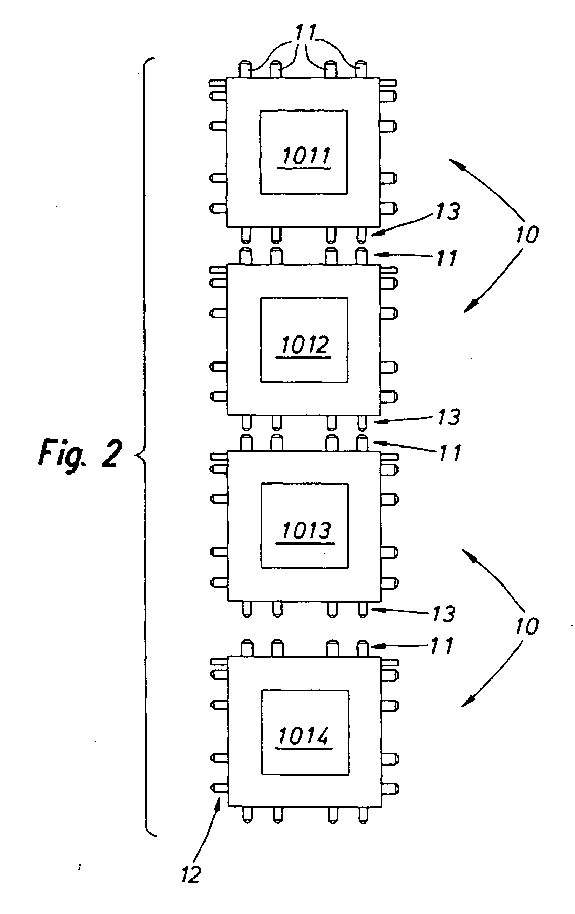

Damit ist es möglich, die in der Figur 2 dargestellte Zusammenschaltung aufzubauen. Bei der in der Figur 2 dargestellten Zusammenschaltung sind beispielhaft vier Bausteine 10 zusammengesteckt. Diese vier Bausteine 10 sind mit den Bezugsziffern 1011, 1012, 1013 und 1014 gekennzeichnet. Die vier Bausteine 10 der Figur 2 sind über die Stecker 11 und 13 miteinander verbunden. Dabei sind die Stecker 13 des Bausteins 1011 mit den Steckern 11 des Bausteins 1012 zusammengesteckt. Entsprechend sind die Stecker 11 und 13 des Bausteins 1012 und des Bausteins 1013 sowie des Bausteins 1013 und des Bausteins 1014 zusammengesteckt.

An den Steckern 11 des Bausteins 1011 liegen die Signale mindestens einer Empfangsantenne an. Über die Stecker 13 und 11 der jeweils folgenden Bausteine 1012, 1013 und 1014 werden diese Siganale an die genannten Bausteine 1012, 1013 und 1014 weitergegeben. Damit sind sämtliche vier Bausteine 10 mit den Signalen der mindestens einen Empfangsantenne versorgt. Diese Signale können dann über die Stecker 12 der vier Bausteine 10 an insgesamt sechszehn Empfänger in der jeweils gewünschten Weise weitergeleitet werden.

Der Baustein 10 der Figur 1 weist weiterhin vier Stecker 14 auf. Jeder dieser Stecker 14 ist mit einem der Stecker 12 gekoppelt. Über die Stecker 14 können Signale dem Baustein 10 eingegeben werden, wobei diese Signale dann an die jeweils zugehörigen Stecker 12 weitergegeben werden.

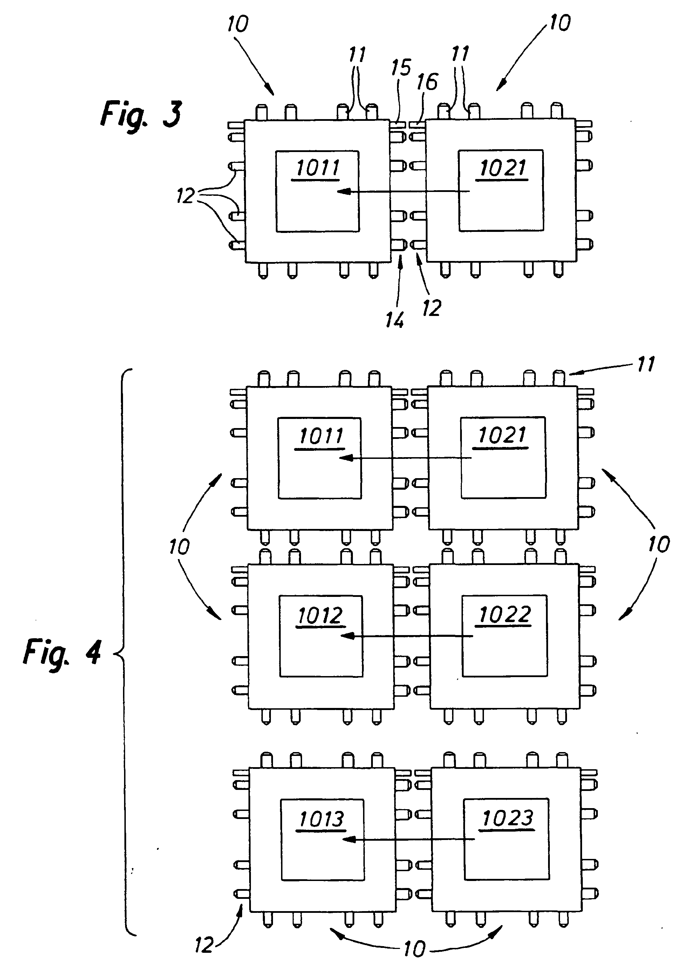

In der Figur 3 ist eine Zusammenschaltung zweier Bausteine 10 dargestellt. Die beiden Bausteine 10 sind dabei mit den Bezugszeichen 1011 und 1021 gekennzeichnet. Die Stecker 12 des Bausteins 1021 sind in die Stecker 14 des Bausteins 1011 eingesteckt. Damit ist es bei der Zusammenschaltung der Bausteine 10 der Figur 3 möglich, insgesamt acht Signale von Empfangsantennen über die Stecker 11 der beiden Bausteine 10 zu empfangen und zu verarbeiten und über die Stecker 12 des Bausteins 1011 an vier Empfänger weiterzuleiten.

Wie aus der Figur 1 hervorgeht, ist der Baustein 10 weiterhin noch mit zwei Steckern 15, 16 versehen. Wie aus der Figur 3 hervorgeht, ist der Stecker 16 des Bausteins 1021 in den Stecker 15 des Bausteins 1011 eingesteckt. Über diese Stecker 15, 16 können all diejenigen Daten zwischen den beiden Bausteinen 1011, 1021 ausgetauscht werden, die für den Betrieb der Zusammenschaltung der Bausteine 10 in der Figur 3 erforderlich sind. Dabei handelt es sich insbesondere um Daten, mit deren Hilfe der Baustein 1011 erkennt, dass der Baustein 1021 vorhanden ist. Mit Hilfe dieser Information "weiß" der Baustein 1011, dass insgesamt acht Signale von Empfangsantennen zur Verfügung stehen und an die an seine Stecker 12 angeschlossenen Empfänger verteilt werden können.
Der Baustein 1011 kann daraufhin die von den Empfängern jeweils ausgewählten Signale an die Stecker 12 weiterleiten. Handelt es sich dabei um Signale von Empfangsantennen, die an die Stecker 11 des Bausteins 1021 angeschlossen sind, so teilt der Baustein 1011 den Wunsch des jeweiligen Empfängers über die Stecker 15, 16 an den Baustein 1021 mit, so dass dieser Baustein 1021 dann das ausgewählte Signal von dem Stecker 11 an seinen entsprechenden Stecker 12 weiterleiten kann. Über die zusammengesteckten Stecker 12 und 14 der Bausteine 1021, 1011 wird dann das weitergeleitete Signal durch den Baustein 1011 durchgeschleift und an dem entsprechenden Stecker 12 des Bausteins 1011 an den Empfänger ausgegeben.

Im Hinblick auf die Figuren 2 und 3 ist es wesentlich, dass es sich bei den dort erläuterten Bausteinen 1011, 1012, 1013, 1014, 1021 immer um denselben Baustein 10 der Figur 1 handelt. Dieser Baustein 10 ist schaltungstechnisch derart ausgebildet, dass er beliebig kaskadiert werden kann. Dies bedeutet, dass der Baustein 10 gemäß der Figur 1 im Grundzustand dazu geeignet ist, vier eingangsseitige Signale von Empfangsantennen beliebig an vier ausgangsseitige Empfänger weiterzuleiten. Gemäß der Figur 2 kann der Baustein 10 jedoch auch "in Richtung" der Empfänger beliebig kaskadiert werden. Dies bedeutet, was eine Zusammenschaltung von Bausteinen 10 gemäß der Figur 2 vier eingangsseitige Signale von Empfangsantennen an ein beliebiges Vielfaches von vier ausgangsseitigen Empfängern in beliebiger Weise weiterleiten kann. Weiterhin ist es gemäß der Figur 3 möglich, dass der Baustein 10 "in Richtung" der Signale der Empfangsantennen kaskadiert ist. Dies bedeutet, dass eine Zusammenschaltung von Bausteinen 10 entsprechend der Figur 3 dazu geeignet ist, ein beliebiges Vielfaches von vier eingangsseitigen Signalen von Empfangsantennen an vier ausgangsseitige Empfänger in beliebiger Weise weiterzuleiten.

An dieser Stelle soll darauf hingewiesen werden, dass der Baustein 10 gemäß der Figur 1 nicht zwingend mit jeweils vier eingangsseitigen Steckern 11 und vier ausgangsseitigen Steckern 12 und daraus resultierend mit vier Steckern 13 bzw. vier Steckern 14 versehen sein muss. Es ist ebenfalls möglich, dass die Anzahl "vier" durch jede andere Anzahl ersetzt werden kann. So ist es insbesondere denkbar, dass auch nur zwei oder gar sechs oder acht eingangsseitige Stecker 11 bzw. ausgangsseitige Stecker 12 und daraus resultierend entsprechende Anzahlen von Steckern 13 und 14 vorgesehen sein können.

Aufgrund der freien Kaskadierbarkeit des Bausteins 10 der Figur 1 "in Richtung" der ausgangsseitigen Empfänger, wie auch "in Richtung" der eingangsseitigen Signale der Empfangsantennen, ist es möglich eine Zusammenschaltung gemäß der Figur 4 zu erstellen. Dort sind beispielhaft sechs Bausteine 10 der Figur 1 zusammengeschaltet. Die Bausteine 10 sind mit den Bezugszeichen 1011, 1012, 1013, 1021, 1022 und 1023 gekennzeichnet. Diese sechs Bausteine 10 sind über die Stecker 11, 12, 13, 14 zusammengesteckt. Weiterhin sind die Stecker 15 und 16 der jeweils zusammengehörigen Bausteine 10 ebenfalls ineinandergesteckt.

Insgesamt ist es damit bei der Zusammenschaltung der Figur 4 möglich, acht eingangsseitige Signale, die an den Steckern 11 der Bausteine 1011, 1021 anliegen, in beliebiger Weise an zwölf ausgangsseitige Empfänger weiterzuleiten, wobei diese Empfänger an den Steckern 12 der Bausteine 1011, 1012, 1013 angeschlossen sind.

Es versteht sich, dass die matrixartige Zusammenschaltung von Bausteinen 10 gemäß der Figur 4 beliebig erweitert werden kann.

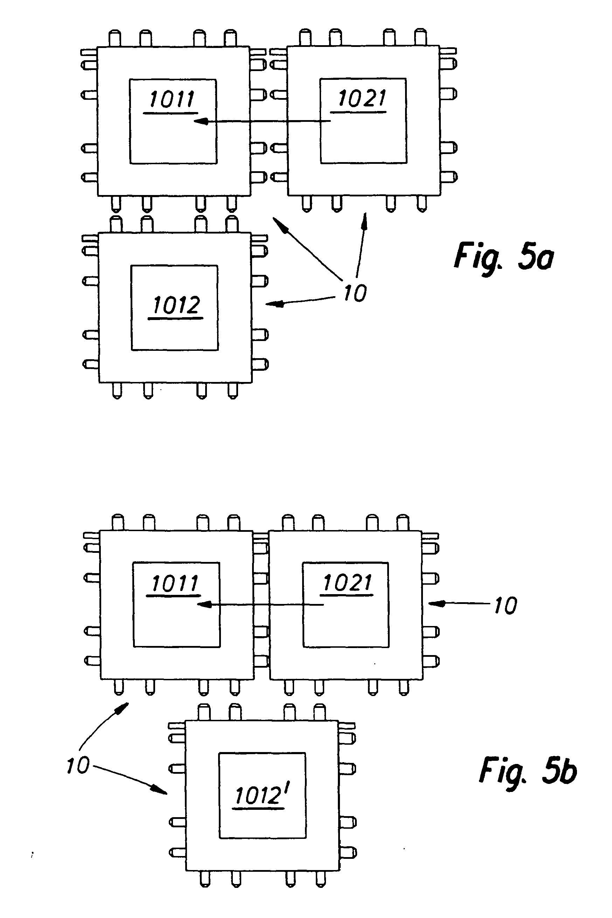

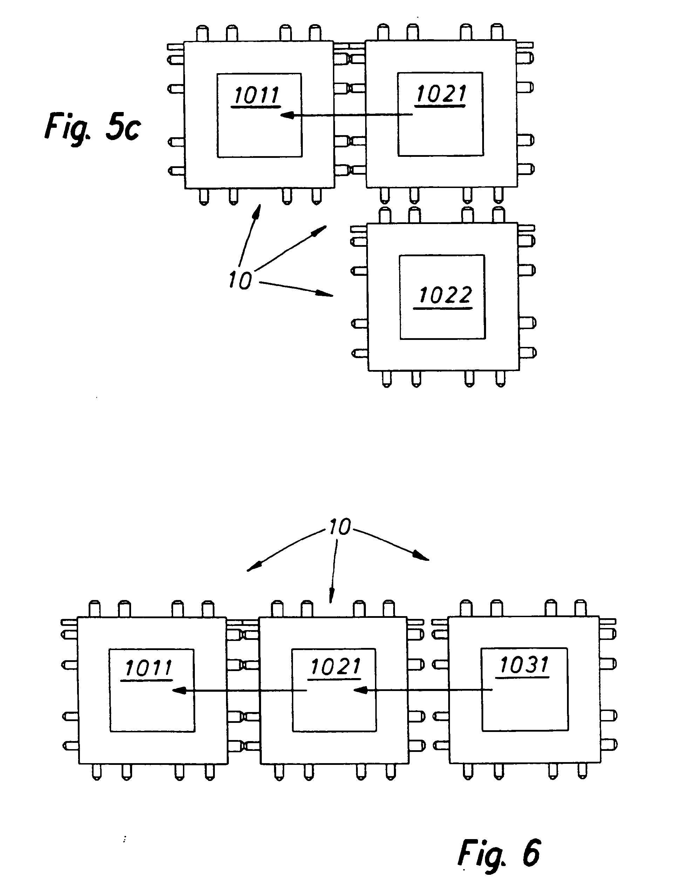

Weiterhin ist es möglich, die Bausteine 10 der Figur 1 gemäß den Figuren 5a, 5b und 5c zusammenzuschalten. In diesen Figuren sind jeweils drei Bausteine 10 vorhanden, die jedoch unterschiedlich miteinander zusammengesteckt sind.

So sind die Bausteine 10 in der Figur 5a derart zu einer Zusammenschaltung ineinendergesteckt, dass die an den Baustein 1011 angeschlossenen, ausgangsseitigen Empfänger aus insgesamt acht eingangsseitigen Signalen von Empfangsantennen auswählen können. Die an den Baustein 1012 angeschlossenen, ausgangsseitigen Empfänger können jedoch nur aus vier angeschlossenen, eingangsseitigen Signalen von Empfangsantennen auswählen. Bei der Figur 5b ist der Baustein 1012' mit zwei seiner Stecker 11 mit Steckern 13 des Bausteins 1011 und mit den anderen beiden seiner Stecker 11 mit Steckern 13 des Bausteins 1021 zusammengesteckt. Damit ist es wiederrum möglich, dass einerseits die an den Baustein 1011 angeschlossenen Empfänger insgesamt aus acht eingangsseitigen Signalen von Empfangsantennen auswählen können, während die an den Baustein 1012' angeschlossenen Empfänger nur aus vier eingangsseitigen Signalen von Empfangsantennen auswählen können. Der Unterschied der Figur 5b im Vergleich zur Figur 5a besteht jedoch darin, dass durch die unterschiedliche Steckweise den an den Baustein 1012' der Figur 5b angeschlossenen Empfängern andere Signale von Empfangsantennen zur Verfügung stehen, wie den an den Baustein 1012 der Figur 5a angeschlossenen Empfänger. In der Figur 5c ist der Baustein 1012 der Figur 5a durch den Baustein 1022 der Figur 5c ersetzt. Damit wird wiederum erreicht, dass die an den Baustein 1022 der Figur 5c angeschlossenen Empfänger andere Signale von Empfangsantennen auswählen können als die an den Baustein 1012 der Figur 5a angeschlossenen Empfänger.

In der Figur 6 ist eine Zusammenschaltung von Bausteinen 10 der Figur 1 dargestellt, die einer weiteren Kaskadierung der Zusammenschaltung der Figur 3 entspricht. Die Bausteine 10 der Figur 6 sind dabei mit den Bezugszeichen 1011, 1021, 1031 gekennzeichnet. Mit Hilfe der Figur 6 soll nochmals deutlich gemacht werden, dass der Baustein 10 der Figur 1 "in Richtung" der eingangsseitigen Signale der Empfangsantennen beliebig kaskadierbar ist.

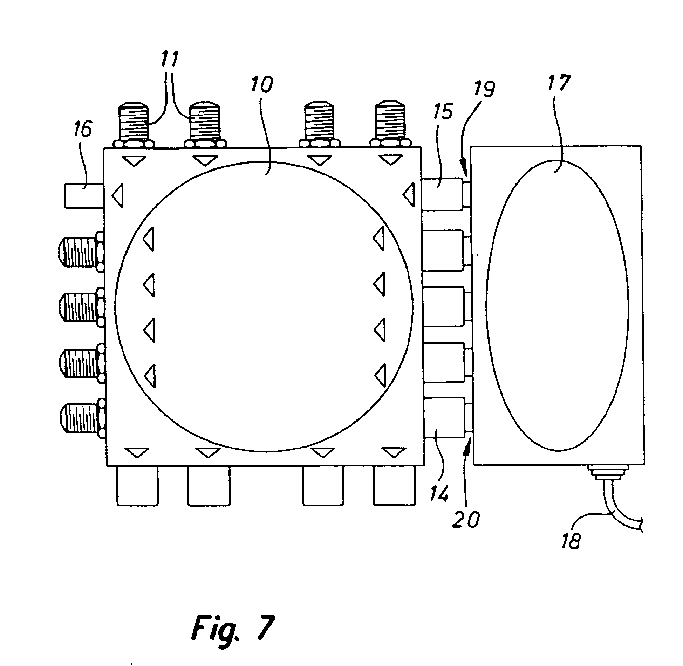

In der Figur 7 ist der Baustein 10 zusammen mit einem Netzteil 17 dargestellt. Das Netzteil 17 kann über ein Netzkabel 18 an eine Versorgungsspannung angeschlossen werden. Das Netzteil 17 ist zumindest mit einem Stecker 19 versehen, mit dem das Netzteil 17 in den Stecker 15 des Bausteins 10 einsteckbar ist. Weiterhin kann das Netzteil 17 mit einem oder mehreren Steckern 20 versehen sein, mit denen es in die Stecker 14 des Bausteins 10 ansteckbar ist.

Über den Stecker 19 des Netzteils 17 und den Stecker 15 des Bausteins 10 wird der Baustein 10 von dem Netzteil 17 mit Spannung versorgt. Diese Spannung wird von dem Baustein 10 insbesondere dazu verwendet, dass über die Stecker 11 die an den Baustein 10 eingangsseitig angeschlossenen Empfangsantennen mit Spannung versorgt werden. Die gegebenfalls vorhandenen Stecker 20 des Netzteils 17 haben keine elektrische Funktion sondern dienen nur der festen Verbindung des Netzteils 17 mit dem Baustein 10.

Über den Stecker 16 des Bausteins 10 wird die von dem Netzteil 17 erzeugte Spannung an weitere, mit dem Baustein 10 zusammengesteckte Bausteine 10 weitergegeben. Auf diese Weise können sämtliche Empfangsantennen, die über die Stecker 11 an mehrere, zusammengesteckte Bausteine 10 angeschlossen sind, mit Spannung versorgt werden.

Im Hinblick auf eine Zusammenschaltung mehrerer Bausteine 10 beispielsweise gemäß der Figur 4 wird darauf hingewiesen, dass auch bei einer derartigen Zusammenschaltung nur ein einziges Netzteil 17 erforderlich ist. Dieses Netzteil 17 wird in der Figur 4 in den Baustein 1021 eingesteckt. Damit sind über die Stecker 11 der Bausteine 1011, 1021 sämtliche Empfangsantennen mit Spannung versorgt. Weitere Netzteile 17 sind nicht erforderlich, da von den Netzteilen 17 nur die Empfangsantennen, nich jedoch die Bausteine 10 als solche mit Spannung versorgt werden.

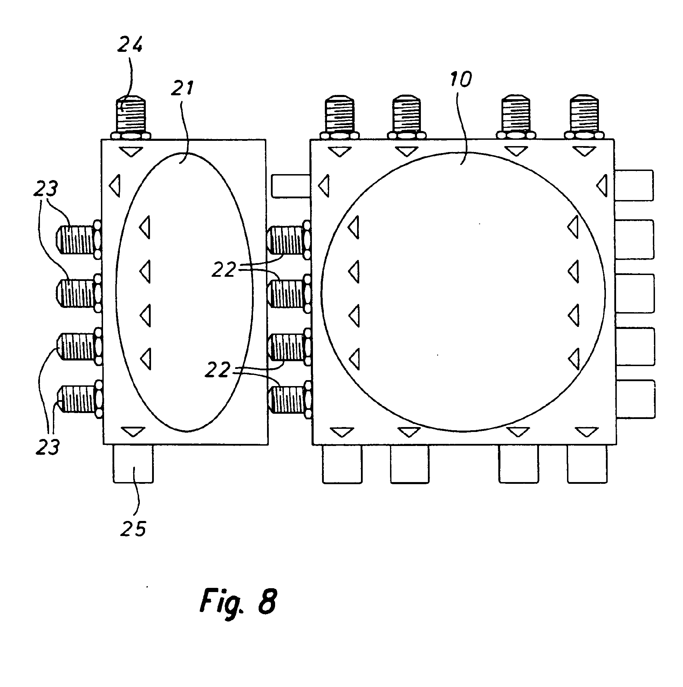

In der Figur 8 ist ein Baustein 10 dargestellt, in den ein VHF/UHF-Bauteil 21 eingesteckt ist. Das VHF/UHF-Bauteil 21 weist Stecker 22 auf, mit denen es in die Stecker 12 des Bausteins 10 einsteckbar ist. Weiterhin weist das VHF/UHF-Bauteil 21 Stecker 23 auf, von denen jeder mit dem zugehörigen Stecker 22 des VHF/UHF-Bauteils 21 verbunden ist. Auf diese Weise werden die auf den Steckern 22 ankommenden Signale von dem VHF/UHF-Bauteil 21 unverändert an die Stecker 23 weitergeleitet.

Weiterhin ist das VHF/UHF-Bauteil 21 mit einem Stecker 24 versehen, der der eingangsseitigen Einspeisung eines VHF/UHF-Signals dient. Ein weiterer Stecker 25 stellt dieses VHF/UHF-Signal ausgangsseitig wieder zur Verfügung.

Das über den Stecker 24 eingespeiste VHF/UHF-Signal wird innerhalb des VHF/UHF-Bauteils 21 mit Hilfe einer elektrischen Schaltung an alle vier ausgangsseitigen Stecker 23 weitergegeben. Die elektrische Schaltung weist zu diesem Zweck insbesondere Filter und dergleichen auf. Damit sind auf den Steckern 23 einerseits das VHF/UHF-Signal, sowie andererseits das von dem jeweils zugehörigen Stecker 12 des angeschlossenen Bausteins 10 abgegebene Signal vorhanden. An die Stecker 23 des VHF/UHF-Bauteils 21 sind dann die jeweiligen Empfänger angeschlossen.

Im Hinblick auf die Zusammenschaltung mehrerer Bausteine 10 "in Richtung" der Empfänger, wie dies beispielhaft in der Figur 2 dargestellt ist, wird darauf hingewiesen, dass in derselben Weise auch die VHF/UHF-Bauteile 21 kaskadiert werden können. Das VHF/UHF-Signal kann also auf diese Weise an sämtliche angeschlossene Empfänger weitergeleitet werden.

Bei den elekrischen Schaltungen des Bausteins 10 und des VHF/UHF-Bauteils 21 handelt es sich vorzugsweise um passive Schaltungen. Insoweit ist eine Spannungsversorgung dieser Schaltungen nicht erforderlich. Alternativ ist es jedoch möglich, dass von den angeschlossenen Empfängern über die Stecker 23 jeweils eine elektrische Versorgungsspannung an das VHF/UHF-Bauteil 21 weitergegeben wird. Von dort kann diese Versorgungsspannung über die Stecker 22 und die Stecker 12 an den angeschlossenen Baustein 10 weitergegeben werden. Von dem Baustein 10 kann wiederum über die Stecker 14 und die Stecker 12 die genannte Versorgungsspannung an eine oder mehrere weitere eingesteckte Bausteine 10 weitergegeben werden. Somit kann insgesamt eine beliebige Zusammenschaltung von Bausteinen 10 und ggf. zusätzlichen VHF/UHF-Bauteilen 21 von den angeschlossenen Empfängern mit Spannung versorgt werden.

Gemäß der Figur 1 weist der Baustein 10 ein vorzugsweise etwa quadratisches Gehäuse auf, in dem die elektrischen Schaltungen untergebracht sind, und an dem die Stecker 11, 12, 13, 14, 15, 16 gehalten sind. Die vier Stecker 11 und die vier Stecker 13 sind auf einander gegenüberliegenden Seiten des Gehäuses des Bausteins 10 angeordnet. Damit die Stecker 11 und die Stecker 13 zweier Bausteine 10 zusammengesteckt werden können, ist die Anordnung der Stecker 11 und der Stecker 13 zueinander gleichartig ausgebildet. Die vier Stecker 12 und die vier Stecker 14 sind auf den anderen beiden Seiten des Gehäuses einander gegenüberliegend angeordnet. Damit die Stecker 12 und die Stecker 14 zweier Bausteine 10 zusammengesteckt werden können, sind die Stecker 12 und die Stecker 14 in entsprechend gleichartiger Weise angeordnet.

Weiterhin ist an derjenigen Seite, an der die Stecker 12 vorhanden sind, der Stecker 16, und an derjenigen Seite, an der die Stecker 14 vorhanden sind, der Stecker 15 angeordnet. Die Stecker 15 und 16 sind somit ebenfalls auf einander gegenüberliegenden Seiten angeordnet. Damit die Stecker 15 und 16 zweier Bausteine 10 ineinandergesteckt werden können, sind die Stecker 15 und 16 wiederrum in entsprechend gleichartiger Weise an dem Gehäuse des Bausteins 10 angeordnet.

Weiterhin kann das Gehäuse des Bausteins 10 mit (nichtdargestellten) Laschen oder dergleichen versehen sein, mit denen der Baustein 10 beispielsweise an einer Wand montiert werden kann. Entsprechende Laschen können auch an dem Netzteil 17 und an dem VHF/UHF-Bauteil 21 vorhanden sein, um auch diese Teile an einer Wand zu befestigen.

## Patentansprüche

1. Elektrischer Baustein (10) zur Weiterleitung von Signalen mindestens einer Empfangsantenne an mindestens einen Empfänger mit einer ersten Anzahl von eingangsseitigen Steckern (11) für die Signale der Empfangsantenne, denen eine gleiche Anzahl von ausgangsseitigen Steckern (13) für die Signale der Empfangsantenne zugeordnet sind, wobei die den Signalen der Empfangsantenne zugeordneten eingangsseitigen und ausgangsseitigen Stecker (11, 13) zweier Bausteine (10) zusammensteckbar sind, **dadurch gekennzeichnet, dass** eine zweite Anzahl von eingangsseitigen Steckern (14) für die Signale des Empfängers vorhanden sind, denen eine gleiche Anzahl von ausgangsseitigen Steckern (12) für die Signale des Empfängers zugeordnet sind, wobei die den Signalen des Empfängers zugeordneten eingangsseitigen und ausgangsseitigen Stecker (12, 14) zweier Bausteine (10) zusammensteckbar sind, dass der Baustein (10) mit einer elektrischen Schaltung versehen ist, die dazu geeignet ist, die auf einem der eingangsseitigen Stecker (11) von der Empfangsantenne anliegenden Signale in beliebiger Weise an einen der ausgangsseitigen Stecker (12) für den Empfänger weiterzuleiten, und die weiterhin dazu geeignet ist, die auf einem der eingangsseitigen Stecker (14) von dem Empfänger anliegenden Signale an den zugehörigen ausgangsseitigen Stecker (12) für den Empfänger und die auf einem der eingangsseitigen Stecker (11) von der Empfangsantenne anliegenden Signale an den zugehörigen ausgangsseitigen Stecker (13) für die Empfangsantenne weiterzuleiten.

2. Baustein (10) nach Anspruch 1, **dadurch gekennzeichnet, dass** die eingangsseitigen Stecker (14) und die ausgangsseitigen Stecker (12) für die Signale des Empfängers auf einander gegenüberliegenden Seiten des Bausteins (10) angeordnet sind.

3. Baustein (10) nach einem der Ansprüche 1 oder 2, **dadurch gekennzeichnet, dass** die erste Anzahl geradzahlig ist.

4. Baustein (10) nach einem der Ansprüche 1 bis 3, **dadurch gekennzeichnet, dass** die eingangsseitigen Stecker (11) und die ausgangsseitigen Stecker (13) für die Signale der Empfangsantenne auf einander gegenüberliegenden Seiten des Bausteins (10) angeordnet sind.

5. Baustein (10) nach einem der Ansprüche 1 bis 4, **dadurch gekennzeichnet, dass** die zweite Anzahl geradzahlig ist.

6. Baustein (10) nach einem der Ansprüche 1 bis 5, **dadurch gekennzeichnet, dass** die erste und die zweite Anzahl gleich sind.

7. Baustein (10) nach einem der vorstehenden Ansprüche, **dadurch gekennzeichnet, dass** zwei Stecker (15, 16) für die Übermittlung von Daten zwischen zwei Bausteinen (10) vorgesehen sind, wobei die beiden Stecker (15, 16) der beiden Bausteine (10) zusammensteckbar sind.

8. Baustein (10) nach Anspruch 7, **dadurch gekennzeichnet, dass** die beiden Stecker (15, 16) auf einander gegenüberliegenden Seiten des Bausteins (10) angeordnet sind.

9. Zusammenschaltung von elektrischen Bausteinen (10) nach einem der Ansprüche 1 bis 8 zur Weiterleitung von Signalen mindestens einer Empfangsantenne an mindestens einen Empfänger, **dadurch gekennzeichnet, dass** zwei oder mehr Bausteine (10) zusammengesteckt sind.

10. Zusammenschaltung nach Anspruch 9, **dadurch gekennzeichnet, dass** der Baustein (10) in jeglicher beliebigen Zusammenschaltung unverändert verwendbar ist.

11. Zusammenschaltung nach einem der Ansprüche 9 oder 10, **dadurch gekennzeichnet, dass** ein mit einem der Bausteine (10) zusammengestecktes Netzteil (17) vorhanden ist.

12. Zusammenschaltung nach einem der Ansprüche 9 bis 11, **dadurch gekennzeichnet, dass** ein, zwei oder mehrere mit dem bzw. den Bausteinen (10) zusammengesteckte VHF/UHF-Bauteile (21) vorhanden sind.

## Claims

1. Electrical module (10) for passing along signals of at least one reception antenna to at least one receiver with a first quantity of plugs on the input side (11) for the signals of the reception antenna, to which an equal quantity of plugs on the output side (13) for the signals of the reception antenna are assigned, wherein the plugs on the input side and the output side (11, 13) of two modules (10) that are assigned to the signals of the reception antenna can be fit together, **characterized in that** a second quantity of plugs on the input side (14) are available for the signals of the receiver, to which an equal quantity of plugs on the output side (12) are assigned for the signals of the receiver, wherein the plugs on the input side and the output side (12, 14) of two modules (10) that are assigned to the signals of the receiver can be fit together and that the module (10) is supplied with an electrical circuit suitable for passing the signals applied to one of the plugs on the input side (11) of the reception antenna along in an arbitrary fashion to one of the plugs on the output side (12) for the receiver, and that is also suitable for passing the signals applied to one of the plugs on the input side (14) of the receiver along to the accompanying plug on the output side (12) for the receiver and for passing the signals applied to one of the plugs on the input side (11) of the reception antenna along to the accompanying plug on the output side (13) for the reception antenna.

2. Module (10) according to Claim 1, **characterized in that** the plugs on the input side (14) and the plugs on the output side (12) for the signals of the receiver are arranged on opposite sides of the module (10).

3. Module (10) according to one of the claims 1 or 2, **characterized in that** the first quantity is an even number.

4. Module (10) according to one of the claims 1 to 3, **characterized in that** the plugs on the input side (11) and the plugs on the output side (13) for the signals of the reception antenna are arranged on opposite sides of the module (10).

5. Module (10) according to one of the claims 1 to 4, **characterized in that** the second quantity is an even number.

6. Module (10) according to one of the claims 1 to 5, **characterized in that** the first quantity and the second quantity are equal.

7. Module (10) according to one of the above claims, **characterized in that** two plugs (15, 16) are supplied for the transfer of data between two modules (10), wherein the two plugs (15, 16) of the two modules (10) can be fit together.

8. Module (10) according to Claim 7, **characterized in that** the two plugs (15, 16) are arranged on opposite sides of the module (10).

9. Connection of electrical modules (10) according to one of the claims 1 to 8 to pass along signals of at least one reception antenna to at least one receiver, **characterized in that** two or more modules (10) are connected.

10. Connection according to Claim 9, **characterized in that** the module (10) can be used without changes in any arbitrary connection.

11. Connection according to one of the claims 9 or 10, **characterized in that** a power supply unit (17) connected to one of the modules (10) exists.

12. Connection according to one of the claims 9 to 11, **characterized in that** one, two or more VHF/UHF modules (21) connected with the module or modules (10) exist.

## Revendications

1. Composant électrique (10) pour la transmission de signaux d'au moins une antenne réceptrice à au moins un récepteur avec un premier nombre de connecteurs du côté de l'entrée (11) pour les signaux de l'antenne réceptrice, auxquels est affecté un nombre identique de connecteurs du côté de la sortie (13) pour les signaux de l'antenne réceptrice, les connecteurs du côté de l'entrée et du côté de la sortie (11, 13), affectés aux signaux de l'antenne réceptrice, de deux composants (10) pouvant être connectés ensemble, **caractérisé en ce qu'**il y a un deuxième nombre de connecteurs du côté de l'entrée (14) pour les signaux du récepteur, auxquels est affecté un nombre identique de connecteurs du côté de la sortie (12) pour les signaux du récepteur, les connecteurs du côté de l'entrée et du côté de la sortie (12, 14), affectés aux signaux du récepteur, de deux composants (10) pouvant être connectés ensemble, **en ce que** le composant (10) est doté d'un circuit électrique qui convient à la transmission de quelque manière que ce soit des signaux présents sur l'un des connecteurs du côté de l'entrée (11), de l'antenne réceptrice à l'un des connecteurs du côté de la sortie (12) pour le récepteur et qui convient en outre à la transmission des signaux présents sur l'un des connecteurs du côté de l'entrée (14), du récepteur au connecteur du coté de la sortie (12) correspondant pour le récepteur et des signaux présents sur l'un des connecteurs du côté de l'entrée (11), de l'antenne réceptrice au connecteur du côté de la sortie (13) correspondant pour l'antenne réceptrice.

2. Composant (10) selon la revendication 1, **caractérisé en ce que** les connecteurs du côté de l'entrée (14) et les connecteurs du côté de la sortie (12) pour les signaux du récepteur sont disposés sur des faces du composant (10) opposées l'une à l'autre.

3. Composant (10) selon l'une quelconque des revendications 1 ou 2, **caractérisé en ce que** le premier nombre est pair.

4. Composant (10) selon l'une quelconque des revendications 1 à 3, **caractérisé en ce que** les connecteurs du côté de l'entrée (11) et les connecteurs du côté de la sortie (13) pour les signaux de l'antenne réceptrice sont disposés sur des faces du composant (10) opposées l'une à l'autre.

5. Composant (10) selon l'une quelconque des revendications 1 à 4, **caractérisé en ce que** le deuxième nombre est pair.

6. Composant (10) selon l'une quelconque des revendications 1 à 5, **caractérisé en ce que** le premier et le deuxième nombres sont identiques.

7. Composant (10) selon l'une quelconque des revendications précédentes, **caractérisé en ce que** deux connecteurs (15, 16) pour la transmission de données entre deux composants (10) sont prévus, les deux connecteurs (15, 16) des deux composants (10) pouvant être connectés ensemble.

8. Composant (10) selon la revendication 7, **caractérisé en ce que** les deux connecteurs (15, 16) sont disposés sur des faces du composant (10) opposées l'une à l'autre.

9. Montage de composants électriques (10) selon l'une quelconque des revendications 1 à 8 pour la transmission de signaux d'au moins une antenne réceptrice à au moins un récepteur, **caractérisé en ce que** deux composants (10) ou plus peuvent être connectés ensemble.

10. Montage selon la revendication 9, **caractérisé en ce que** le composant (10) peut être utilisé invariablement dans tout montage quel qu'il soit.

11. Montage selon l'une quelconque des revendications 9 ou 10, **caractérisé en ce qu'**il y a un bloc d'alimentation (17) connecté à l'un des composants (10).

12. Montage selon l'une quelconque des revendications 9 à 11, **caractérisé en ce qu'**il y a un, deux composants VHF / UHF (21) ou plus connectés au ou aux composant(s) (10).
